# EUROPEAN PATENT APPLICATION

(11) **EP 1 512 587 A1**
(43) Date of publication of application: **09.03.2005**
(21) Application number: 04015884.2
(22) Date of filing: 06.07.2004
(51) Int. Cl.: B60R 21/20

(54) **Airbag cover, airbag module**

(30) Priority: 04.09.2003 JP 2003313310
(71) Applicant: TAKATA CORPORATION, Minato-ku, Tokyo 106-8510 (JP)
(72) Inventor: Hayashi, Shinji, Minatu-ku, Tokyo 106-8510 (JP); Morita, Masaru, Minatu-ku, Tokyo 106-8510 (JP)
(74) Representative: VOSSIUS & PARTNER

(57) **Abstract**

To provide a rational technology for configuring an airbag cover for covering a vehicle's airbag.

An airbag cover 100 is provided with a tear line 102, an open-out door panel 100a which is openable when the tear line 102 is torn, a thinned portion 120 formed in the boundary area between the main body of the airbag cover and the open-out door panel 100a on the back surface 101 of the cover, and a second rib 130 extending in the direction intersecting the extending surface of the open-out door panel 100a between the main body of the airbag cover and the open-out door panel 100a. The airbag cover 100 is configured such that the extending length of the portion on which the second rib 130 is provided is larger than the wall thickness of the respective portions on the side of the open-out door panel 100a with respect to the second rib 130 (Fig. 6).

## Description

The present invention relates to a technology for configuring an airbag cover for covering a vehicle's airbag.

Hitherto, in an airbag apparatus to be mounted to a vehicle, an airbag cover for covering an airbag is provided. A configuration publicly known as an airbag cover of this type is provided, for example, with a linear groove, which is so-called a tear line, on the inner wall surface of the airbag cover. This airbag cover is deployed by being torn along the tear line upon collision of the vehicle, so as to allow deployment and inflation of the vehicle's airbag toward the outside of the airbag cover.

In the above-described configuration, establishment of a technology further effective for allowing the airbag cover to be torn along the tear line upon deployment and inflation of the vehicle's airbag in which the airbag cover is torn along the tear line and the torn portion to be deployed smoothly is highly requested. Prior art is disclosed in JP-2001-80442 A.

Accordingly, in view of such points, the object of the present invention is to provide a rational technology for configuring an airbag cover for covering a vehicle's airbag and a technology relating thereto.

This object is achieved with the features of the claims. The present invention is a technology which can be applied to motor vehicles and other various vehicles such as trains, motorbikes (saddle-type vehicles), airplanes, boats, and so on.

The invention according to Claim 1 relates to a configuration of an airbag cover for covering a vehicle's airbag from the cabin side. The vehicle's airbag according to the present invention is adapted to protect an occupant by being deployed and inflated toward an occupant protecting area upon collision of the vehicle.

The airbag cover of the present invention is provided with at least a linear groove, an open-out door, and hinge mechanism.

The linear groove is a linearly formed groove having a depth within the limit of the wall thickness of the airbag cover. Typically, a groove formed linearly on a molded member by after-processing (processing performed by laser processing equipment) by laser cut corresponds to the "linear groove" in the present invention. The groove is a portion having a smaller wall thickness with respect to the respective portions of the airbag cover, along which the airbag cover is torn when the vehicle's airbag is deployed and inflated, and is referred to as a tear line.

The open-out door is a door adapted to be opened out upon tearing of the linear groove in association with deployment and inflation of the vehicle's airbag.

The hinge mechanism has a function for allowing opening action of the open-out door toward the cabin. Typically, the hinge mechanism is formed in the area connecting one end and the other end of the linear groove.

Particularly in the present invention, the hinge mechanism has extending portions or projections. The extending portions have a configuration to extend in the direction intersecting the extending surface of the open-out door between the main body of the airbag cover and the open-out door. Typically, the "extending portion" of the present invention is defined by a projecting portion projecting from the main body of the airbag cover in the direction intersecting the extending surface of the open-out door and the main body of the airbag cover at the position corresponding to the projecting portion. The term "extends in the direction intersecting the extending surface of the open-out door" here is intended to widely include a state of extending in the direction orthogonal to the extending surface of the open-out door, and hence includes not only a state of extending in the direction orthogonal to the extending surface of the open-out door, but also a state of extending in the direction oblique to the extending surface of the open-out door.

Also, in the present invention, the extending length of the extending portion is configured to have larger wall thickness than the respective portions on the side of the open-out door with respect to the extending portion. The term "the respective portions on the side of the open-out door" includes the open-out door and the boundary area between the open-out door and the extending portion. Typically, the "extending length of the extending portion" in the present invention is defined by the height of the projecting portion projecting from the main body of the airbag cover in the direction intersecting the extending surface of the open-out door and the wall thickness of the main body of the airbag cover at the position corresponding to the projecting portion.

With such a configuration of the airbag cover according to Claim 1, rational construction of the airbag cover for covering the vehicle's airbag is achieved.

In other words, according to the present invention, the position of the hinge for opening the open-out door is clearly defined by the extending portion provided between the main body of the airbag cover and the open-out door configured as described above. This is because the hinge can be formed exactly at the designed position, avoiding the position of the hinge to be formed at an unexpected position as a result of generation of forced bent in the boundary area between the hinge mechanism and the open-out door. In addition, since the load applied to the position of the hinge when the vehicle's airbag is deployed and inflated and hence the open-out door is opened can be received by the extending portion having a large wall thickness, the strength of the airbag cover can be increased.

In addition to the configuration of the airbag cover according to Claim 1, the invention according to Claim 2 is further configured such that the wall thickness of the open-out door at the portion continuing from the extending portion is thinned with respect to the wall thickness at other portions of the open-out door. In other words, the airbag cover is formed with a thinned portion at the portion corresponding to the root of the open-out door.

With such a configuration of the airbag cover according to Claim 2, by cooperation of the extending portion and the thinned portion, the position of the hinge of the open-out door can be positively formed at the thinned portion between the extending portion and the open-out door, and the position of the hinge when the open-out door opens can be clearly defined. Also, since the open-out door can easily be bent at the thinned portion between the extending portion and the open-out door, a hinge effect can be improved.

The invention according to claim 3 relates to the configuration of an airbag cover for covering a vehicle's airbag from the cabin side. The airbag cover of the present invention is provided with at least a linear groove, an open-out door and a hinge mechanism for allowing an opening action of the open-out door towards the cabin. The configuration of the linear groove and the open-out door is substantially the same as that in claim 1 and the linear groove and the open-out door according to claim 1 may be used for the airbag cover as defined in claim 3.

The hinge mechanism in the invention according to claim 3 comprises a thinned portion which extends between the main body of the airbag cover and the open-out door. The thinned portion has a wall thickness which is smaller than the wall thickness of the adjacent portions and in particular smaller than the wall thickness of the airbag cover and the open-out door. In general, the arrangement of the thinned portion as described above with respect to claim 2, i.e. at the portion corresponding to the root of the open-out door, may be used in the airbag cover as defined in claim 3.

In such a configuration of the airbag cover, the position of the hinge mechanism is defined by the thinned portion. The wall thickness and the configuration of the thinned portion in the boundary area between the hinge mechanism and the open-out door is calculated so that, when the airbag is deployed and the open-out door is opened, the thinned portion functions as a hinge and the load applied to the position of the hinge can be received.

In addition to the configuration of the airbag cover according to Claim 1 or Claim 2 or claim 3, the invention of Claim 4, is further configured such that a storage member for storing the vehicle's airbag and the airbag cover are joined with each other. In such a joint, the extending portion is configured as a joint rib to be abutted against and joined to the storage member.

According to the embodiment of claim 5, the joint comprises a joint rib connected to the storage member and abutting to the airbag cover. Such a joint rib is an integral part of the storage member. Accordingly, an extending portion configured as a joint rib is formed as a unit with the storage member to be abutted against and joined to the airbag cover.

According to an alternative embodiment of claim 6, the joint comprises a joint rib which constitutes a separate member. In such a joint between the airbag cover and the storage member an extending portion configured as a joint rib is provided in the area of contact between the airbag cover and the storage member.

According to the embodiment of claim 7, the joint rib as defined in claim 6 is connected to the airbag cover and/or to the storage member. In such a configuration the position of the hinge of the open-out door can be defined by cooperation of the extending portion and the thinned portion as described above with respect to the airbag cover according to claim 2.

Thus, according to the present invention in the joint between the airbag cover and the storage member the joint rib, or the extending portion designed as a joint rib is optionally an integral part of the airbag cover or of the storage member or is a separate part.

The "storage member" in the present invention is intended to widely include a member having a configuration in which the vehicle's airbag can be stored, and a configuration of the storage member includes a state in which the member joined to the airbag cover stores the vehicle's airbag, a state in which a member for storing the vehicle's airbag is attached to and detached from a member joined to the airbag cover, and so on. Typically, a configuration in which a bracket member having a leg member is joined to the airbag cover, and the member for storing the vehicle's airbag (retainer) can be attached to and detached from the leg member can be employed. In this case, the "storage member" of the present invention is formed of a bracket member having a leg member and the retainer with the vehicle's airbag stored therein.

In addition to the configuration in which the storage member by itself has a function to store the vehicle's airbag independently, a configuration in which the storage member stores the vehicle's airbag partly or entirely as a result of attachment of the retainer with the vehicle's airbag stored therein to the storage member via a bracket or the like is also included in the scope of the "storage member" in the present invention. More specifically, the member having the leg member to which the retainer with the vehicle's airbag stored therein can be attached via the bracket or the like and defining a space for storing the retainer with the leg member is a typical example of the "storage member". In a state in which the retainer is stored in the storage space of the storage member, the vehicle's airbag is consequently stored in the storage space.

With such a configuration of the airbag cover according to the present invention, the portion corresponding to the root of the open-out door is positively fixed to the storage member side via the extending portion or the joint rib, and hence opening action of the open-out door can be carried out smoothly as designed. Among others, when the extending portion is used as a joint rib in the configuration of Claim 2, cooperation of the extending portion, which serves as the joint rib, and the thinned portion can smoothen the opening action of the open-out door.

The invention according to Claim 8 relates to a configuration of an airbag device. According to the embodiment of claim 9, the airbag device is structured as a module. The airbag device includes a vehicle's airbag, a storage member for storing the vehicle's airbag, gas feeding mechanism for feeding inflation gas to the vehicle's airbag, and the airbag cover, which is substantially the same as that in any of Claims 1 to 7, and is mounted to a vehicle in block of the airbag module. It is also applicable to constitute the airbag module of the present invention with a member on which the airbag cover is disposed, that is, a panel so-called an instrument panel.

Therefore, with such a configuration of the airbag device according to Claims 8 and 9, the position of the hinge can be formed exactly at the position as designed when opening the open-out door for allowing the vehicle's airbag to be deployed and inflated upon collision of the vehicle avoiding the position of the hinge to be formed at an unexpected position as a result of generation of forced bent in the boundary area between the hinge mechanism and the open-out door. Also, since the load applied to the position of the hinge, which is generated when the vehicle's airbag is deployed and inflated, and hence the open-out door is opened, can be received by the extending portion, which has a larger wall thickness, the strength of the airbag cover can be achieved.

Additionally, the airbag device may be configured such that the wall thickness of the portion between the extending portion and the open-out door is thinned to the wall thickness smaller than that of the open-out door. In other words, the airbag cover is formed with a thinned portion on the side of the open-out door with respect to the extending portion.

According to such a configuration of the airbag device, by the cooperation of the extending portion and the thinned portion, the position of the hinge can be formed positively at the thinned portion between the extending portion and the open-out door, and in addition, since the open-out door can be bent easily at the position of the hinge, the effect of the hinge increases.

In addition to the above described configurations, the airbag device according to the present invention is configured such that the storage member for storing the vehicle airbag and the airbag cover are joined with each other. In such joint, the extending portion abuts against the storage member and is used as the joint rib.

With such a configuration of the airbag device, since the portion corresponding to the root of the open-out door is positively fixed via the extending portion or the joint rib, the opening action of the open-out door can be smoothened as designed. Among others, when the extending portion is used as the joint rib, the opening action of the open-out door can be smoothen by the cooperation of the extending portion, which serves as joint rib, and the thinned portion.

In a configuration of an airbag device comprising an airbag cover which is substantially the same as that in any of claims 3 to 7, the hinge mechanism is formed by a thinned portion between the main body of the airbag cover and the open-out door and the position of the hinge mechanism is defined by the thinned portion as described above.

Additionally, the joint between the airbag cover and the storage member of the embodiments described above with respect to claims 4 to 7 may be used for the airbag device according to claims 8 and 9.

Accordingly, in the assembled condition of the airbag device, a joined rib or an extending portion configured e.g. as a joint rib is provided in the joint between the airbag cover and the storage member, wherein the extending portion or the joint rib is optionally an integral part of the airbag cover or the storage member or a separate part.

As described above, according to the present invention, by devising the configuration of the hinge mechanism for allowing the opening action of the open-out door, a rational technology for configuring the airbag cover for covering the vehicle's airbag and an airbag device provided with the airbag cover is realized.

Referring now to the drawings, embodiments of the present invention will be described.
Fig. 1 is a perspective view showing a state of the airbag cover according to a first embodiment of the present embodiment when viewed from the back surface of the cover;
Fig. 2 is a top view of the portion in the vicinity of the tear line in Fig. 1;
Fig. 3 is an enlarged view of a portion A in Fig. 2;
Fig. 4 is a drawing showing a cross-sectional configuration taken along the line B-B in Fig. 3;
Fig. 5 is a drawing showing a cross-sectional configuration taken along the line C-C in Fig. 3;
Fig. 6 is a drawing showing a cross-sectional configuration taken along the line D-D in Fig. 3;
Fig. 7 is a cross-sectional view of an airbag device showing a state in which the airbag cover is torn.
Fig. 8 is a drawing showing a cross-sectional configuration of an airbag cover according to a second embodiment showing the same portion as Fig. 6; and
Fig. 9 is a drawing showing a cross-sectional configuration of an airbag cover according to a third embodiment showing the same portion as Fig. 6.

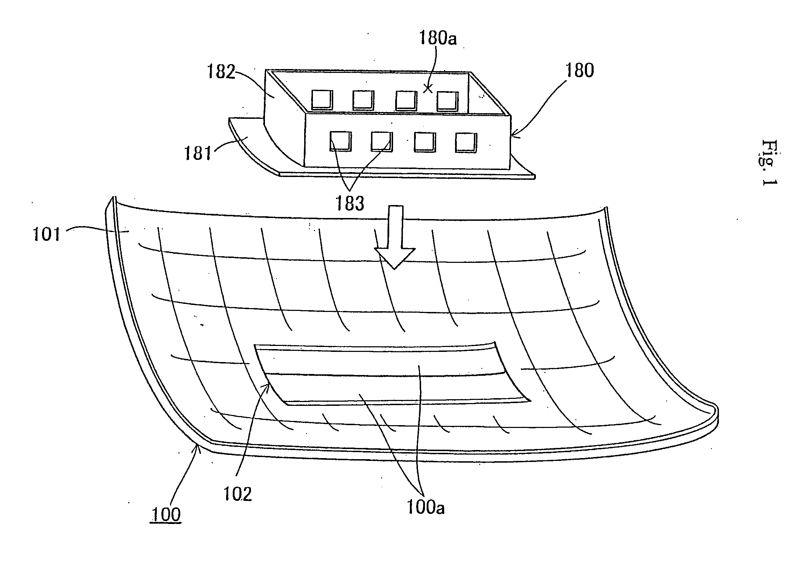

As a first embodiment of the present invention the "airbag cover" 100 will be described based on Fig. 1 to Fig. 6.
As shown in Fig. 1, in the present embodiment, a tear line 102 is formed on the back surface 101 of the airbag cover 100 for covering the vehicle's airbag. The airbag cover 100 has a plate shape formed three-dimensionally (solid shape) of resin material, such as PP (Polypropylene) material, TPO (Thermoplastic Elastomer Polyolefin), or the like. The back surface 101 of the airbag cover 100 is defined as a surface on the backside when the side of the airbag cover 100 facing an occupant in a state in which the airbag cover 100 is installed is assumed to be a front surface.

The tear line 102 is a thinned portion provided for allowing the deployment of the airbag cover 100 upon deployment and inflation of the vehicle's airbag. In the present embodiment, it is provided by a linear groove formed on the back surface 101 of the airbag cover. The tear line 102 is defined as a linear thinned portion which has smaller wall thickness with respect to the wall thickness of the respective portions of the airbag cover 100. This tear line 102 corresponds to the "linear groove having a depth within the limit of the wall thickness of the airbag cover" in the present invention.

In the present embodiment, the airbag cover 100 is torn along the tear line 102 upon deployment and inflation of the vehicle's airbag, and a pair of open-out door panels 100a is adapted to open toward the front side of the cover like double doors (like casement doors), that is, the airbag cover 100 is broken along the tear line 102, so that the open-out door panel 100a opens toward the front side of the airbag cover 100 (toward the "cabin side" in the present invention). The open-out door panel 100a corresponds to the "open-out door" in the present invention.

As shown in Fig. 1, the present embodiment is configured such that a storage member 180 is joined to the back surface 101 of the airbag cover 100 at the position corresponding to the opening of the open-out door panel 100a. The storage member 180 includes a base portion 181 to be joined to the back surface 101 of the airbag cover 100 so as to oppose thereto, and a leg member portion 182 projecting upright from the base portion 181 in the direction away from the open-out door panel 100a. The portion of the leg member 182 projecting upright is formed with a plurality of openings 183, and the openings 183 are used for engaging hooking members 172 used when mounting a retainer 170 which will be described later to the storage member 180. In other words, the retainer 170 is adapted to be attachable and detachable to the storage member 180 via the hooking members 172. The storage member 180 forms a storage space 180a in the area defined by the base portion 181, the leg member 182, and the retainer 170 which will be described later. Therefore, in a state in which the retainer 170 is mounted to the storage member 180, the vehicle's airbag 150 is stored in the storage space 180a, and the vehicle's airbag 150 is covered by the airbag cover 100 from the cabin side. The vehicle's airbag 150 corresponds to the "vehicle's airbag" in the present invention.

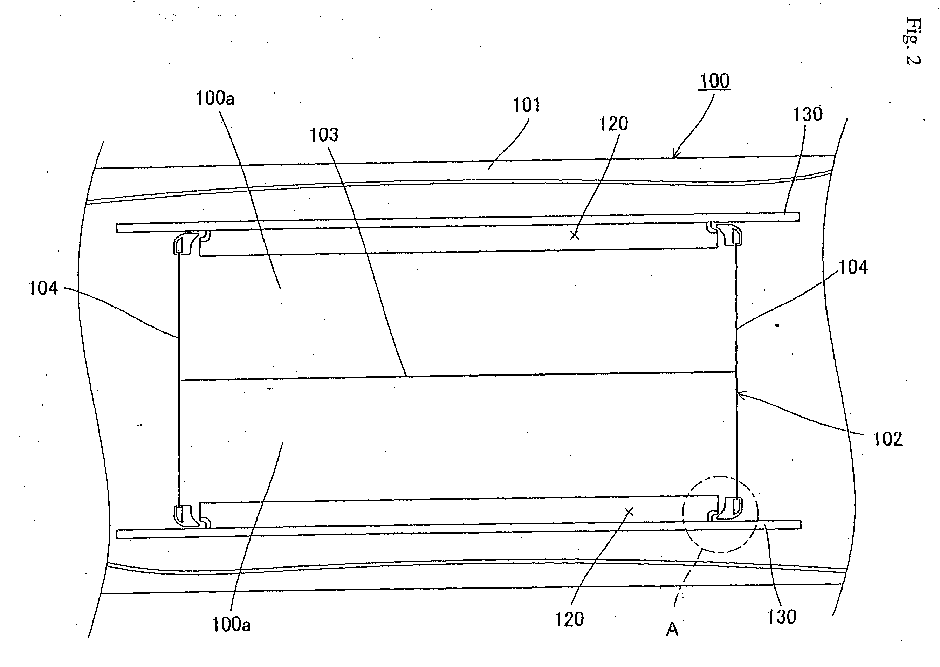

Fig. 2 is a top view of the portion in the vicinity of the tear line 102 in Fig. 1.

As shown in Fig. 2, the tear line 102 includes a first linear groove 103, and two second linear grooves 104 in combination, and shaped substantially like a letter H as a whole in plan view. The first linear groove 103 extends linearly in the lateral direction in Fig. 2, and the second linear grooves 104 extend linearly in the vertical direction in Fig. 2 at both ends of the first linear groove 103 (direction orthogonal to the first linear groove 103).

On the back surface 101 of the airbag cover 100, at the positions where the two second linear grooves 104 opposes, thinned portions 120 extending in parallel to the first linear groove 103 are provided on both sides of the first linear groove 103. On the outsides of the thinned portions 120, there are provided second ribs 130 projecting upright on the back surface 101 of the airbag cover 100 along the direction in which the thinned portions 120 extend.

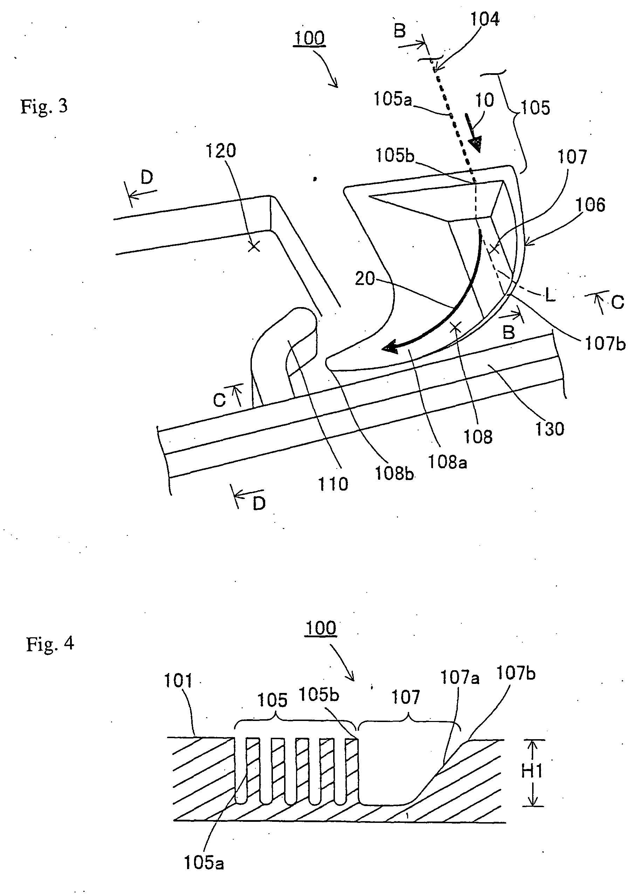

Referring now to Fig. 3 to Fig. 6, the detailed configuration of the portion A in Fig. 2 of the airbag cover 100 will be described. The portion A is formed at both end areas of the second linear grooves 104, that is, four locations (four corners) on a tear line 102.

An enlarged drawing of the portion A in Fig. 2 will be shown in Fig. 3.

As shown in Fig. 3, laser cut groove 105 is formed at the end area of the second linear groove 104. The laser cut groove 105 is constructed of dot shaped holes 105a (depth of the hole H1) formed by laser cut so as to extend discontinuously. In other words, recesses and projections defined by the holes 105a are alternately repeated in the direction in which the laser cut groove 105 extends.

As shown in Fig. 3, in the area of the end 105b of the laser cut groove 105 (end area of the second linear groove 104), a recess 106 is formed on the extension of the laser cut groove 105. In other words, the area of the end 105b of the laser cut groove 105 is provided with a construction combining the laser cut groove 105 and the recess 106 (hybrid construction). The recess 106 includes a first recess 107 and a second recess 108.

The first recess 107 extends from the area of the end 105b of the laser cut groove 105 in the direction along an extension L of the laser cut groove 105 (the direction indicated by an arrow 10 in Fig. 3). The second recess 108 is extended in the direction intersecting with the direction along the extension L of the laser cut groove 105 (the direction toward a first rib 110 and the thinned portion 120).

Fig. 4 shows a cross-sectional configuration taken along the line B-B in Fig. 3.

As shown in Fig. 4, the first recess 107 has a depth H1 which is equivalent with the depth H1 of the hole 105a of the laser cut groove 105, and includes a bevel 107a on the side of the end 107b thereof. The depth of the recess in the direction of the thickness of the bevel 107a (depth of thinning) reduces gradually at a constant ratio from the side of the laser cut groove 105 as it gets closer to the end 107b (as it gets away from the end 105b of the laser cut groove 105).

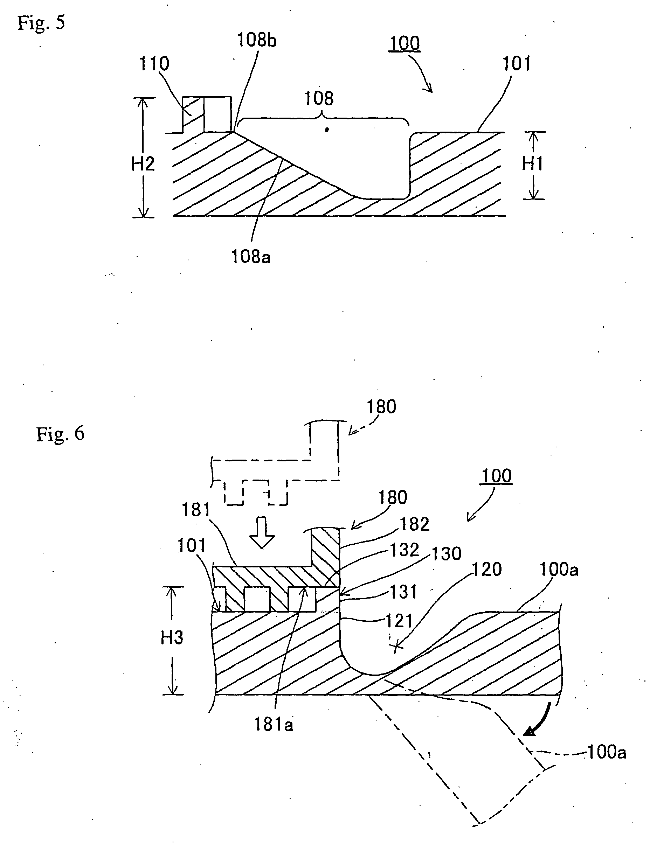

Fig. 5 shows a cross-sectional configuration taken along the line C-C in Fig. 3.

As shown in Fig. 5, the second recess 108 has a depth H1 which is equivalent to the depth H of the hole 105a of the laser cut groove 105, and further has a bevel 108a. The depth of the bevel 108a in the direction of the thickness (depth of thinning) reduces gradually at a constant ratio from the first recess 107 as it gets closer to the end 108b (as it gets away from the bevel 107a).

The width of the groove of the second recess 108 in plan view reduces gradually as it gets closer to the end 108b.

In the present embodiment, as shown in Fig. 3 and Fig. 5, the first rib 110 is provided on the extension from the first recess 107 to the second recess 108. The first rib 110 is a rib which has a height expanding the thickness of the airbag cover 100 (height shown by H2 in Fig. 5). The first rib 110 is recessed on the side of the end 108b of the second recess 108 in plan view, and is constructed to surround the end 108b.

Fig. 6 shows a cross-sectional configuration taken along the line D-D in Fig. 3.

As shown in Fig. 6, the thinned portion 120 is formed in the boundary area between the main body of the airbag cover and the open-out door 100a of the airbag cover on the back side 101. The thinned portion 120 corresponds to the thinned portion (portion to which mass-removal is done), and is depressed from the back surface 101 of the cover toward the front surface. The thinned portion 120 facilitates bending action of the open-out door panel 100a in the direction indicated by an arrow in the drawing. The thinned portion 120 allows the opening action of the open-out door panel 100a toward the cabin side. In other words, the thinned portion 120 constitutes a hinge mechanism (hinge mechanism) of the open-out door panel 100a working when the open-out door panel 100a of the airbag cover 100 is torn along the tear line 102 and opened. The thinned portion 120 corresponds to the "thinned portion" in the present invention.

A second rib 130 is provided between the main body of the airbag cover and the open-out door panel 100a of the airbag cover 100 at the position continuing from the thinned portion 120 of the above-described configuration. The second rib 130 is a projection projecting (projecting upright) from the back surface 101 of the cover in the direction opposite to the cabin, and has a configuration extending in the direction intersecting, that is, in Fig. 6, in the direction orthogonal to, the extending surface in which the open-out door panel 100a extends. The second rib 130 is disposed so that a side surface 131 extends along an upright surface 121 of the thinned portion 120 when the airbag cover 100 and the storage member 180 are joined to each other by a joining method described later. The "extending portion" in the present invention is defined by the second rib 130 and the portion of the main body of the airbag cover at which the second rib 130 is provided.

In the present embodiment, the extending length of the portion where the second rib 130 is provided (the "extending length of the extending portion" in the present invention), that is, the length obtained by adding the projecting height of the second rib 130 to the wall thickness of the main body of the airbag cover (the height shown by H3 in Fig. 6) is configured to be larger than the wall thickness at the respective portion on the side of the open-out door panel 100a with respect to the second rib 130. Therefore, by the cooperation of the thinned portion 120 and the second rib 130 continuing from the thinned portion 120, the position of the hinge of the open-out door panel 100a is clearly defined between the main body of the airbag cover and the open-out door panel 100a. Here, the second rib 130 has a function to clearly define the position of the hinge of the open-out door panel 100a. The second rib 130 and the thinned portion 120 constitute the "hinge mechanism" in the present invention.

When manufacturing the airbag cover 100 in the configuration described above, a molded article on which the tear line 102 is not formed, for example, a plate-shaped molded article formed three-dimensionally, is manufactured first. When molding such molded article, the above-described recess 106, the first rib 110, the thinned portion 120, and the second rib 130 are molded together. Subsequently, the molded body is formed with the tear line 102 by after-processing (in this embodiment, laser cut using a laser cut machining equipment). Consequently, the airbag cover 100 of above-described configuration is obtained. In this manner, by providing the tear line 102 using laser cut as the after-processing, the problem of so-called molding sink is solved and thus the appearance is improved. While the molding sink may be generated when an attempt is made to provide a hinged portion without providing a thinned portion such as the thinned portion 120, when the thinned portion 120 as in the present embodiment is provided, the hinged portion can be formed without generating the molding sink.

Subsequently, the storage member 180 is joined to the airbag cover 100. In this case, firstly, the storage member 180 is placed on the back surface 101 of the airbag cover 100 as sown in Fig. 6, and the bottom surface 181a of the base portion 181 of the storage member 180 is brought into abutment with the back surface 101 of the airbag cover 100. In particular, the horizontal portion of the bottom surface 181a of the base portion 181 is brought into abutment with the upper surface 132 of the second rib 130. Then, the storage member 180 is joined to the airbag cover 100 side by welding via a welding method such as vibration welding (a method of providing vibrations to a resin part to be joined and welding and joining the same with friction energy). Accordingly, the back surface 101 of the airbag cover 100 and the bottom surface 181a of the base portion 181 of the storage member 180 are joined with each other. At this time, in particular, the portion which corresponds to the root of the open-out door panel 100a is positively fixed to the storage member 180 by the upper surface 132 of the second rib 130 continued from the thinned portion 120 joined to the bottom surface 181a of the base portion 181. The second rib 130 here has both a first function to clearly define the position of the hinge of the open-out door panel 100a and a second function as the joint rib.

In this manner, the airbag cover 100 having a storage member 180 of the present embodiment is obtained.

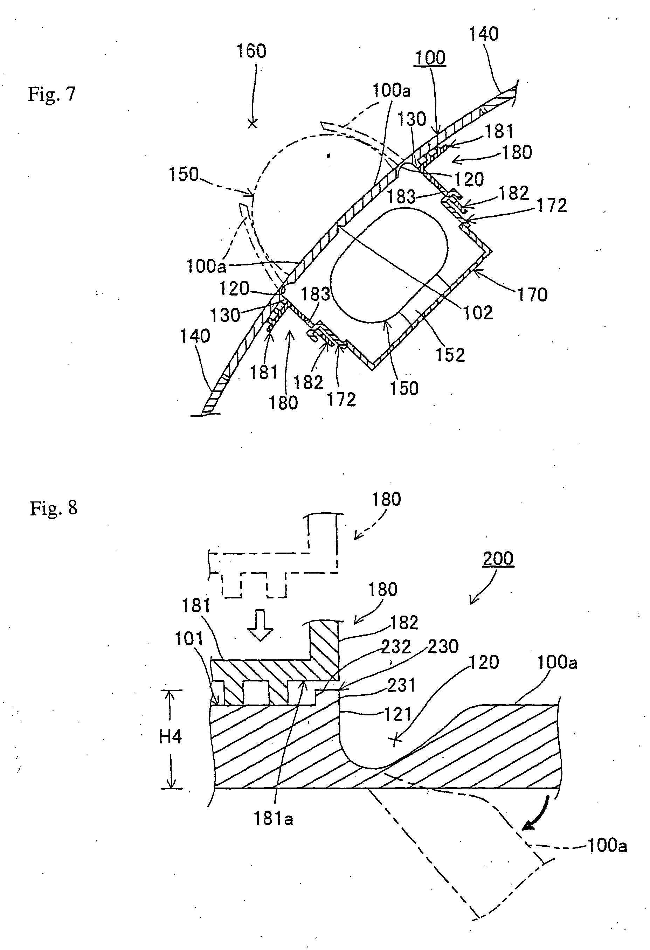

Then, the retainer 170, in which the vehicle's airbag 150, gas feeding mechanism (inflator) 152 are stored, is mounted to the airbag cover 100 having the storage member 180. A method of mounting the retainer 170 to the airbag cover 100 will be described referring to the configuration of the airbag module shown in Fig. 7. Fig. 7 is a cross-sectional view of the configuration of the airbag module, showing a state in which the airbag cover 100 is torn.

As shown in Fig. 7, the airbag module includes the airbag cover 100 provided with the storage member 180, an instrument panel 140 in which the airbag 100 is disposed, the vehicle's airbag 150, the retainer 170 in which the vehicle's airbag 150 is stored in a folded state, a gas feeding mechanism (inflator) 152 integrated in the retainer 170 for feeding inflating gas to the vehicle's airbag 150. the airbag module corresponds to the "airbag module" in the present invention.

Hooking member 172 is secured to the retainer 170, and the retainer 170 is mounted to the airbag cover 100 via the storage member 180 by engaging the hooking members 172 with the openings 183 on the storage member 180. In a state in which the retainer 170 is mounted to the storage member 180 via the hooking members 172, the vehicle's airbag 150 is stored in the storage space 180a. In this manner, according to the present embodiment, the storage member 180 joined to the airbag cover 100 is a member for storing the vehicle's airbag 150 by mounting the retainer 170 to the storage member 180, and the "storage member" of the present embodiment is configured by the retainer 170 and the storage member 180.

Referring now to Fig. 3, Fig. 6, and Fig. 7, the operation of the airbag cover 100 configured as described above will be described.

In the case of front collision of the vehicle, the gas feeding mechanism 152 is activated and the vehicle's airbag 150 is deployed by the inflation gas supplied from the gas feeding mechanism 152. The airbag cover 100 is torn along the substantially H-shaped tear line 102 upon deployment and inflation of the vehicle's airbag 150, and a pair of open-out door panel 100a are brought into deployment like double doors (like casement doors) toward the front surface of the cover.

At this time, the second linear groove 104 is torn along the laser cut groove 105 in the direction indicated by the arrow 10 in the drawing as shown in Fig. 3. Here, since the laser cut groove 105 is formed of holes 105a extending discontinuously and thus recesses and projections defined by the holes 105a are alternately repeated, when the laser cut groove 105 is torn entirely to the end 105b, a force that attempts to tear linearly along the extension L tends to be concentrated to the portion on the extension in the area around the end 105b. In such a case, a tearing phenomenon referred to as so-called "tearover" may occur along the extension L on the portion including the extension L at the end 105b of the laser cut groove 105.

Therefore, in the present embodiment, the recess 106 is provided on the extension of the laser cut groove 105 in addition to the laser cut groove 105, as shown in Fig. 3. The recess 106 is effective for gradually dispersing the force that attempts to generate tearover along the extension L of the laser cut groove 105 and preventing the force generated when being torn is prevented from concentrating to the area around the end 105b of the laser cut groove 105. In other words, the force exerted to the area of the end 105b of the laser cut groove 105 when the airbag cover 100 is torn is dispersed (absorbed) gradually at the bevel 107a of the first recess 107, and is attenuated as it gets closer to the end 107b. Accordingly, the tearing operation of the airbag cover 100 can be preferably controlled.

Also, according to the present embodiment, as shown in Fig. 3, the second recess 108 extending from the first recess 107 to the first rib 110 is provided on the recess 106. Therefore, the force that attempts to tear linearly the portion along the extension L of the laser cut groove 105 may be dispersed by the first recess 107, and then the force may further be dispersed in the directions different from the direction of the extension L of the laser cut groove 105 by the second recess 108 (the direction indicated by an arrow 20 in Fig. 3). Specifically, according to the present embodiment, since the depth of the second recess 108 (depth of thinning) and the width of the groove in plan view are gradually reduced as it gets closer to the end 108b, the force exerted on the area of the end 105b of the laser cut groove 105 is dispersed not only in the direction of the depth, but also in the direction of width when the airbag cover 100 is deployed, and thus the effect of dispersion of the force is assured. Therefore, the tearover (that is, a phenomenon in which the torn portion extends beyond the laser cut groove 105 by energy or force applied when tearing) may be effectively prevented from occurring on the portion including the extension L of the laser cut groove 105 of the airbag cover 100.

In addition, according to the present embodiment, the first rib 110 may receive the force dispersed in the direction toward the first rib 110 by the second recess 108. Accordingly, even when a tear is formed from the first recess 107 to the second recess 108, a tear is prevented from being formed on the side of the first rib 110 opposite from the recess 106 by the first rib 110.

In this manner, the pair of open-out door panels 100a of the airbag cover 100 becomes deployed toward the cabin side (the front surface of the cover) as the tear line 102 is torn. At this time, the torn portions (end areas of the second linear grooves 104) on both sides of the respective open-out door panels 100a (the end area of the second linear groove 104) extend from both sides of the open-out door panels 100a inwardly by the effect of the recess 106 constructed as described above. Such construction is especially effective to improve feasibility of opening of the respective open-out door panels 100a. As shown in Fig. 7, the vehicle's airbag 150 is deployed toward the outside of the airbag cover 100 through the open-out door panels 100a in the deployed state, and projects toward an occupant crash protection area 160 defined in front of the occupant into the inflated and deployed state.

In the present embodiment, when the vehicle's airbag 150 is deployed and inflated, and the open-out door panel 100a are opened, since the position of the hinge relating to the opening action of the open-out door panel 100a is clearly defined by the thinned portion 120 and the second rib 130 as shown in Fig. 6, formation of the position of the hinge at the unexpected position as a result of generation of forced bent in the boundary area between the main body of the airbag cover and the open-out door 100a is avoided, and formation of the position of the hinge exactly at the designed position is achieved. Since the load applied on the position of the hinge when the vehicle's airbag 150 is deployed and inflated, and hence the open-out door panel 100a is deployed may be received by the portion including the second rib 130, that is, by the portion having a larger wall thickness, the strength of the airbag cover 100 may be increased.

In the present embodiment, since the thinned portion 120 continuing from the second rib 130 is provided, the open-out door panel 100a can be bent easily at the position of the hinge, consequently, the hinge effects increase.

Furthermore, in the present embodiment, since the second rib 130 continuing from the thinned portion 120 is joined to the bottom surface 181a of the base portion 181 of the storage member 180, the portion corresponding to the root of the open-out door panel 100a is positively fixed, and hence the opening action of the open-out door panel 100a can be smoothly performed.

In this manner, the second rib 130 according to the present embodiment is rational since it has the first function for clearly defining the position of the hinge when the open-out door panel 100a opens and the second function for positively joining the airbag cover 100 and the storage member 180.

In the present embodiment, it is preferable to set the height (projecting height) of the second rib 130 to a degree which does not impair the appearance. While the second rib 130 is projected upright on the back surface 101 of the airbag cover 100, a configuration in which another rib is provided on the front surface of the airbag cover 100 at the position corresponding to the second rib 130 can also be employed. With such a configuration, the opening action of the open-out door panel 100a can further be stabilized by balancing between the second rib 130 and the above-described another rib.

The present invention is not limited to the embodiment described above, and various applications or modifications may be considered. For example, the following embodiments in which the above-described embodiment is applied may be implemented.

In the above-described embodiment, the case in which the position of the hinge relating to the opening action of the open-out door 100a is defined by the thinned portion 120 and the second rib 130 has been described. However, the configuration of the position of the hinge can be modified variously as needed.

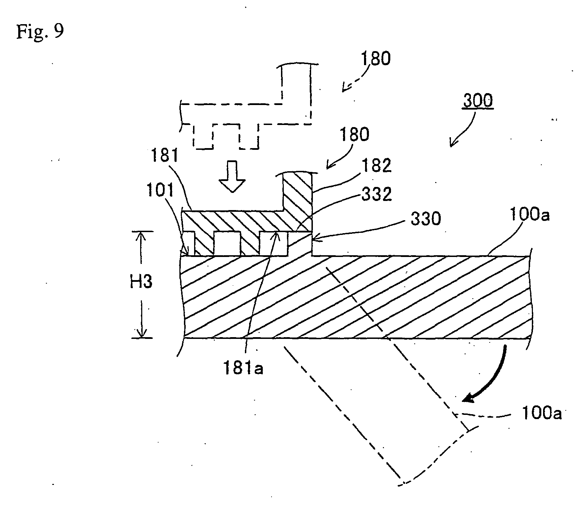

Referring now to Fig. 8 and Fig. 9, a configuration of the airbag cover of another embodiment will be described. In Fig. 8 and Fig. 9, the same components as those shown in Fig. 6 are designated by the same reference numerals, and detailed description about those components is omitted.

Fig. 8 shows a cross-sectional configuration of an airbag cover 200 of another embodiment showing the same portion as in Fig. 6.

According to the airbag cover 200 shown in Fig. 8, when the airbag cover 100 and the storage member 180 are joined to each other, the upright surface of the thinned portion 120 is disposed so as to extend along the side surface 231 of the second rib 230. Then, the upper surface 232 of the second rib 230 of the airbag cover 200 does not abut against the bottom surface 181a of the base portion 181 of the storage member 180. In other words, while the second rib 130 is adapted to serve as the joint rib by abutment of the upper surface 132 of the second rib 130 against the bottom surface 181a of the base portion 181 of the storage member 180 according to the airbag cover 100, the second rib 230 of this embodiment does not have a function as the joint rib. With the second rib 230 having such a configuration as well, it is also possible to form the position of the hinge at least exactly at the designed position by the cooperation with the thinned portion when the open-out door panel 100a opens. In addition, it achieves such effect that the open-out door panel 100a can easily be bent at the position of the hinge, so that the effect of the hinge is improved.

According to the present invention, the hinge can be further modified in that the position of the hinge is defined by the thinned portion 120 alone. In other words, the airbag cover 100; 200 of the present invention does not have an extending portion such as a second rib 130; 230 formed on the airbag cover 100; 200. In an embodiment in which the extending portion is omitted, the remaining wall thickness and the configuration of the thinned portion 120 is adapted to the wall thickness of the airbag cover 100; 200 and the open-out door 100a so that the position of the hinge mechanism can be determined and the formation of unexpected bending forces in the boundary area between the hinge mechanism and the open-out door 100a is avoided.

According to a further modification, the extending portion 130 can be provided in the area where the airbag cover 100; 200 and a storage member 180 are joined. The extending portion may be formed, e.g., as a separate member between the airbag cover 100; 200 and the storage member 180 or as a integral part of the storage member 180 or the airbag cover 100; 200. According to this modification, in the assembled state, i.e., when the airbag cover 100; 200 and the storage member 180 are joined to each other, the extending portion 130 is provided at a position corresponding to that of the second rib in the above-described embodiments.

Fig. 9 is a cross-sectional view of the airbag cover 300 according to another embodiment, showing the same portion as Fig. 6.

According to the airbag cover 300 shown in Fig. 9, the wall thickness between the second rib 230 and the open-out door panel 100a is the same as the wall thickness of the open-out door panel 100a itself. In other words, the airbag cover 300 of the present embodiment does not have a thinned portion as the thinned portion 120 formed on the airbag cover 100. The upper surface 332 of the second rib 330 of the airbag cover 300 abuts against the bottom surface 181a of the base portion 181 of the storage member 180, and serves as joint rib. With the second rib 330 of such configuration as well, the position of the hinge can be formed exactly at the designed position when the open-out door panel 100a opens. Furthermore, since the portion which corresponds to the root of the open-out door panel 100a is positively fixed via the second rib 330, such effect that opening action of the open-out door panel 100a can be smoothly performed as designed is achieved. It is also possible to employ a configuration in which the upper surface 332 of the second rib 330 does not abut against the bottom surface 181a of the base portion 181 of the storage member 180 in Fig. 9. With such a configuration, the hinge can be formed at least exactly at the designed position when the open-out door panel 100a opens.

While the case in which the retainer 170 in which the vehicle's airbag 150 is stored is mounted to the storage member 180 joined to the airbag cover 100 via the hooking members 172 has been described in the above-described embodiments, such configuration that a member corresponding to the retainer 170 is directly joined to the airbag cover 100 without using the member corresponding to the storage member 180 may be employed in the present invention.

While the case in which vibration welding is used for welding and joining the storage member 180 to the airbag cover 100 side has been described in the above-described embodiment, other welding methods, such as ultrasonic wave welding (a method of melting and joining by applying ultrasonic vibration to a resin part to be joined), heat plate welding (a method of melting resin by bringing it into contact with a heat source (heat plate) and joining it before the melted portion is cooled and hardened) may be employed.

## Claims

1. An airbag cover (100; 200; 300) for covering a vehicle's airbag from the cabin side, comprising:
a linear groove (102, 103, 104) having a depth within the limit of the wall thickness of the airbag cover;
an open-out door (100a) which can open toward the cabin side upon tearing of the linear groove; and
hinge mechanism (120) for allowing opening action of the open-out door toward the cabin,
**characterized in that** the hinge mechanism (120) comprises an extending portion (130, 230, 330) extending in the direction intersecting the extending surface of the open-out door between the main body of the airbag cover and the open-out door, and the extending length (H3; H4) of the extending portion is configured to have larger wall thickness than the respective portions on the side of the open-out door.

2. An airbag cover according to Claim 1, **characterized in that** the wall thickness of the open-out door at the portion continuing from the extending portion is thinned with respect to the wall thickness at other portions of the open-out door.

3. An airbag cover (100; 200) for covering a vehicle's airbag from the cabin side, comprising:
a linear groove (102, 103, 104) having a depth within the limit of the wall thickness of the airbag cover;
an open-out door (100a) which can open toward the cabin side upon tearing of the linear groove; and
hinge mechanism (120) for allowing opening action of the open-out door toward the cabin,
**characterized in that** the hinge mechanism (120) comprises a thinned portion (120) between the main body of the airbag cover and the open-out door, and the extending length of the thinned portion is configured to have smaller wall thickness than the respective portions of the open-out door.

4. An airbag cover according to any of Claims 1 to 3, comprising a joint for connecting a storage member (180) for storing the vehicle's airbag with the airbag cover.

5. An airbag cover according to claim 4, wherein the joint comprises a joint rib (130) integrally connected to the storage member and abutting to the airbag cover.

6. An airbag cover according to claim 4, wherein the joint comprises a joint rib (130) which constitutes a separate member.

7. An airbag cover according to claim 6, wherein the joint rib is connected to the airbag cover and/ or to the storage member.

8. An airbag device comprising a vehicle's airbag (150), a gas feeding mechanism (152) for feeding inflation gas to the vehicle's airbag, and an airbag cover (100;200;300) according to any one of claims 1 to 7.

9. An airbag device according to claim 8, which is structured as a module.
